Europäisches Patentamt

European Patent Office

Office européen des brevets

(11) Numéro de publication : **0 354 436 B1**

# (12) FASCICULE DE BREVET EUROPEEN

(45) Date de publication du fascicule du brevet :
**16.09.92 Bulletin 92/38**

(51) Int. Cl.$^5$ : **B61D 17/04, B61D 17/08, B61D 17/10, B62D 31/02**

(21) Numéro de dépôt : **89114093.1**

(22) Date de dépôt : **31.07.89**

(54) **Caisse de voitures ferroviaires.**

(30) Priorité : **08.08.88 FR 8810689**

(43) Date de publication de la demande :
**14.02.90 Bulletin 90/07**

(45) Mention de la délivrance du brevet :
**16.09.92 Bulletin 92/38**

(84) Etats contractants désignés :
**AT BE CH DE ES FR GB IT LI**

(56) Documents cités :
**EP-A- 0 260 200**
**FR-A- 1 168 806**

(56) Documents cités :
**REVUE GENERALE DES CHEMINS DE FER,
vol. 107, no. 3, mars 1988, pages 25-31,
Gauthier-Villars, Paris, FR ; Y. NOEL:
"Desmatériaux de pointe au service du
Métro"**

(73) Titulaire : **GEC ALSTHOM SA
38, avenue Kléber
F-75116 Paris (FR)**

(72) Inventeur : **Moreau, Jean-Marie
22 rue Maurice Utrillo
F-59770 Marly (FR)**

(74) Mandataire : **Weinmiller, Jürgen et al
Lennéstrasse 9 Postfach 24
W-8133 Feldafing (DE)**

EP 0 354 436 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne une caisse de voitures comportant un plancher, un pavillon et des faces constitués chacun de plusieurs panneaux, chaque panneau étant formé d'au moins un réseau de type nid d'abeille et de profilés d'encadrement.

La présence de panneaux de type nid d'abeille permet d'obtenir une caisse plus légère qu'une caisse classique utilisant des panneaux entièrement métalliques.

On connaît, par le document EP-A-0 260 200, une caisse de voitures ferroviaires comportant des panneaux de type nid d'abeille. La structure travaillante ou porteuse de cette caisse est constituée de quatre longerons, deux au niveau du plancher et deux au niveau du pavillon, et de traverses reliant les deux longerons du pavillon.

La présente invention a pour but d'alléger encore la caisse par suppression des quatre longerons et des traverses, les panneaux de type nid d'abeille étant alors reliés directement entre eux.

La présente invention a pour objet une caisse de voitures ferroviaires comportant un plancher, un pavillon et des faces constitués chacun de panneaux, chaque panneau étant formé d'au moins un réseau de type nid d'abeille et de profilés d'encadrement, caractérisée en ce que ces panneaux sont reliés directement entre eux et forment à eux seuls la structure travaillante.

Il est décrit ci-après, à titre d'exemple et en référence au dessin annexé, une caisse selon l'invention.

La figure 1 représente une caisse vue de face.

La figure 2 est une demi-section au niveau d'une porte selon II de la figure 1.

La figure 3 est une demi-section, au niveau d'une fenêtre, selon III de la figure 1.

Les figures 4 et 5 montrent deux détails de la figure 2.

Les figures 6 et 7 montrent deux détails de la figure 3.

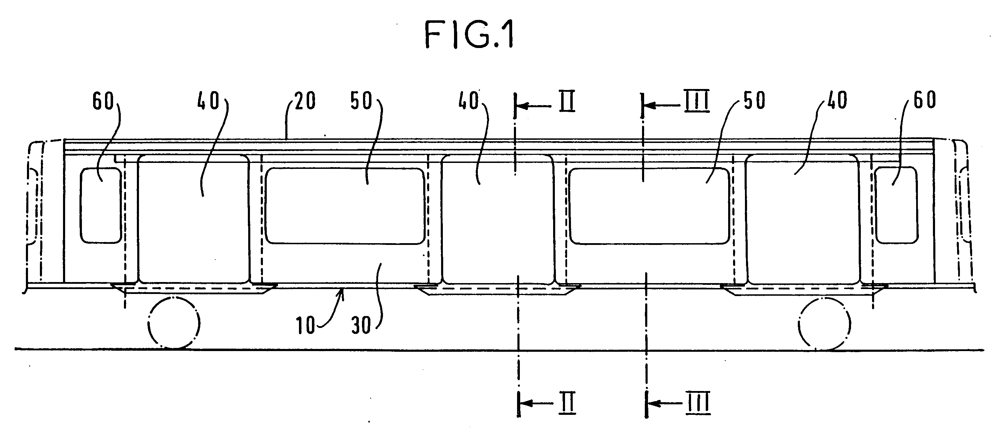

La figure 1 montre une caisse vue de face, comportant un plancher 10, un pavillon 20, une face 30, trois ouvertures 40 pour portes, deux ouvertures 50 pour grandes baies et deux ouvertures 60 pour petites baies.

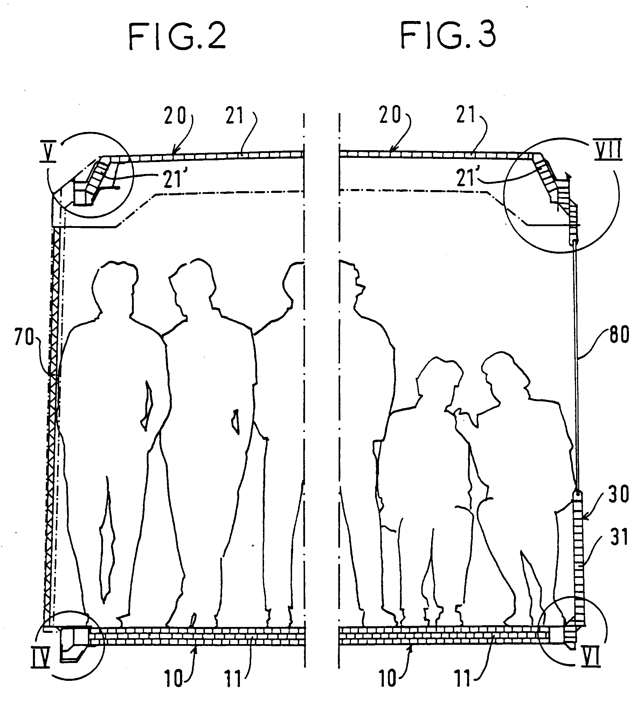

La figure 2 montre la caisse en demi-section, au niveau d'une ouverture de porte.

Dans cette figure sont représentés le plancher 10 constitué d'un panneau de type nid d'abeille 11, le pavillon 20 constitué d'un panneau de type nid d'abeille 21, et une porte 70.

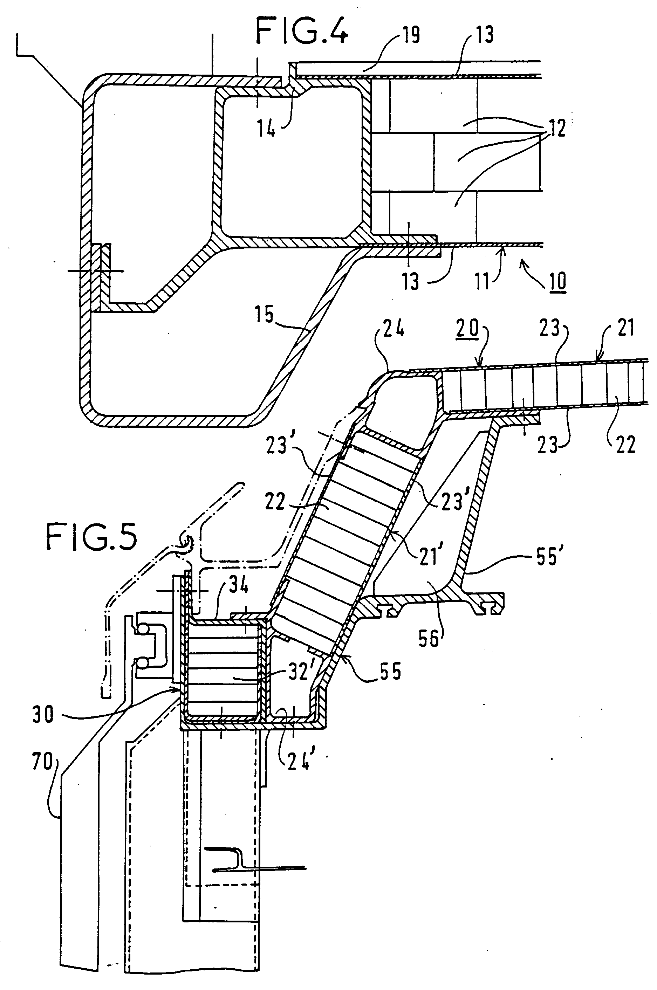

La figure 4 montre, en détail, la constitution du plancher au niveau d'une ouverture de porte. A cet endroit, le plancher 10 est constitué d'un panneau 11 terminé sur un côté par un profilé d'encadrement 14. Ce panneau 11 comporte trois réseaux 12 recouverts par deux peaux 13, ces peaux pouvant être des tôles d'aluminium par exemple. Bien entendu, le panneau 11 peut comporter un seul ou deux réseaux 12.

Le profilé 14 est enveloppé au niveau de la porte par un profilé de renforcement 15.

Dans le compartiment voyageur, le plancher est recouvert par un garnissage 19, qui peut être un tapis en caoutchouc par exemple.

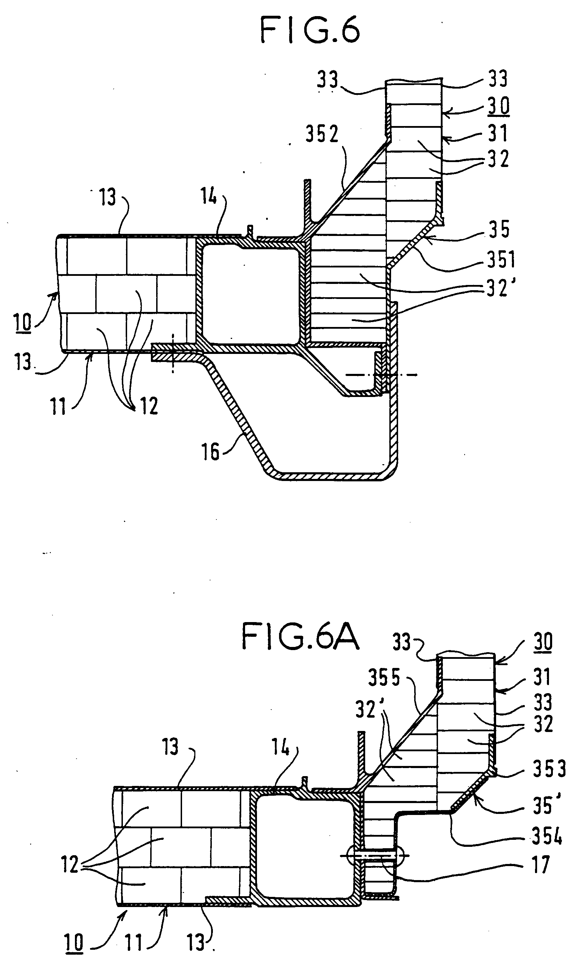

La figure 5 montre, en détail, la constitution du pavillon au niveau d'une ouverture de porte.

La pavillon 20 est constitué d'un panneau 21, d'un profilé 24 assurant un coude, d'un autre panneau 21' prolongeant le profilé et enfin d'un profilé terminal 24'. Les panneaux 21, 21' sont chacun constitué d'un réseau 22, 22', recouvert sur chaque face par une peau 23, 23'.

La face 30 est constituée, au dessus de la porte 70, par un profilé 34 enserrant un réseau nid d'abeille 32'. Le pavillon 20 et la face 30 sont donc reliés entre eux par l'intermédiaire des profilés 24' et 34 assemblés par rivelonnage. Un profilé 55 enveloppe et renforce l'assemblage de ces deux profilés et assure par une partie 55' le supportage du mécanisme de porte.

La figure 3 montre la caisse en demi-section, au niveau d'une grande baie. Dans cette figure sont représentés le plancher 10, le pavillon 20, une face 30 constituée d'un réseau nid d'abeille 31, et une baie 80.

La figure 6 montre, en détail, la constitution du plancher 10 et d'une face 30 à son niveau inférieur. Cette face 30 est constituée par un panneau 31 comportant un réseau nid d'abeille 32 recouvert par deux peaux 33. Cette face est terminée par un profilé 35 en deux parties 351, 352, la partie 352 étant garnie par un réseau nid d'abeille 32'. Le profilé 35 est relié mécaniquement au profilé 14 de plancher. Ces deux profilés sont enveloppés par un profilé de renforcement 16.

La figure 6A montre une variante de réalisation dans laquelle le profilé 35' est en trois parties 353, 354, 355. Ce profilé 35' est relié au profilé 14 par l'intermédiaire de rivets 17.

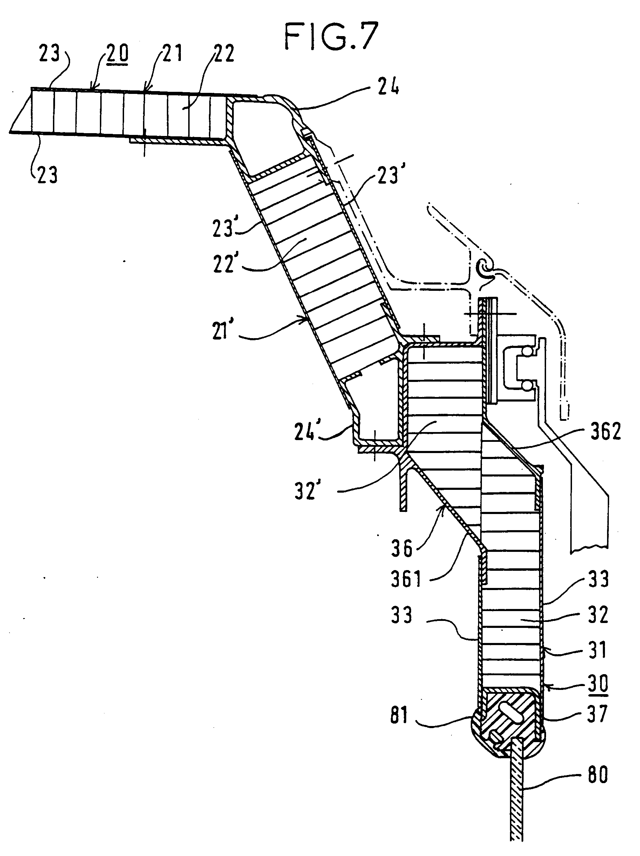

La figure 7 montre, en détail, la constitution du pavillon 20 et d'une face 30 à son niveau supérieur. La face 30 est constituée par un panneau 31 terminé, au niveau du pavillon, par un profilé 36 en deux parties 361, 362, la partie 361 étant garnie par un réseau nid d'abeille 32'. Le profilé 36 est relié mécaniquement au profilé 24' de pavillon.

Le panneau 31 est terminé, au niveau de la baie 80, par un profilé 37 qui reçoit un joint d'étanchéité 81.

## Revendications

1/ Caisse de voitures ferroviaires comportant un plancher (10), un pavillon (20) et des faces (30) constitués chacun de panneaux (11, 21, 21',31), chaque panneau (11, 21, 31) étant formé d'au moins un réseau (12, 22, 22', 32, 32') de type nid d'abeille et de profilés d'encadrement (14, 24, 24', 34, 35, 35', 36), caractérisée en ce que ces panneaux sont reliés directement entre eux et forment à eux seuls la structure travaillante.

2/ Caisse selon la revendication 1, caractérisée en ce que les panneaux sont reliés entre eux au niveau des profilés d'encadrement.

3/ Caisse selon la revendication 1 ou 2, caractérisée en ce que les profilés d'encadrement (34, 35, 35', 36) des faces (30) sont garnis d'un réseau nid d'abeille supplémentaire (32').

## Patentansprüche

1. Eisenbahnwagenkarosserie mit einem Boden (10), einem Dach (20) und Seitenwänden (30), die je aus Platten (11, 21, 21', 31) bestehen, wobei jede Platte (11, 21, 31) aus mindestens einem bienenwabenförmigen Paneel (12, 22, 22', 32, 32') und aus Rahmenprofilen (14, 24, 24', 34, 35, 35', 36) besteht, dadurch gekennzeichnet, daß diese Platten direkt miteinander verbunden sind und alleine die Tragstruktur bilden.

2. Karosserie nach Anspruch 1, dadurch gekennzeichnet, daß die Platten miteinander in Höhe der Rahmenprofile verbunden sind.

3. Karosserie nach Anspruch 1 oder 2, dadurch gekennzeichnet, daß die Rahmenprofile (34, 35, 35', 36) der Seitenwände (30) mit einem zusätzlichen bienenwabenförmigen Paneel (32') versehen sind.

## Claims

1. A body for rail cars, comprising a floor (10), a roof (20) and side faces (30), each constituted by panels (11, 21, 21', 31), each panel (11, 21, 31) being formed by at least one honeycomb type lattice (12, 22, 22', 32, 32') together with frame bar members (14, 24, 24', 34, 35, 35', 36), characterized in that these panels are directly connected to each other and constitute on their own the load-bearing structure.

2. A body according to claim 1, characterized in that the panels are interconnected via their frame bar members.

3. A body according to claim 1 or 2, characterized in that the frame bar members (34, 35, 35', 36) of the side faces (30) are lined with an additional

honeycomb lattice (32').

# FIG.1

EP 0 354 436 B1

# FIG.2

# FIG.3

# FIG.4

# FIG.5

# FIG.6

# FIG.6A

# FIG.7